# EUROPEAN PATENT APPLICATION

(11) **EP 2 583 771 A1**
(43) Date of publication of application: **24.04.2013**
(21) Application number: 11795671.4
(22) Date of filing: 10.06.2011
(51) Int. Cl.: B21J 15/32

(54) **FASTENER FASTENING TOOL**

(30) Priority: 16.06.2010 JP 2010137020
(71) Applicant: Nifco Inc., Kanagawa 244-8522 (JP)
(72) Inventor: ISHIKAWA, Shouji, Yokohama-shi Kanagawa 244-8522 (JP)
(74) Representative: Gassner, Wolfgang
(86) International application number: PCT/JP2011/063417
(87) International publication number: WO 2011/158764

(57) **Abstract**

A tool includes a transfer mechanism transferring a fastener row supported in a supply channel in one direction; a cutoff mechanism cutting off a weakened portion of the fastener row supported in the supply channel; a loading member holding one piece of fastener which has been cut off by the cutoff mechanism in a loading portion located in front in a transfer direction of the transfer mechanism, and positioned by abutting against the front-most row of the supply channel; a slide mechanism moving the loading member forward and backward; and a push-in mechanism expanding an outer diameter of a leg portion by pushing a male member of the fastener loaded in the loading member. The cutoff mechanism cuts off the weakened portion of the fastener in a second row, positioned in the next row by counting the fastener in the front-most row as the first row, and in subsequent rows.

## Description

### Field of Technology

The present invention relates to a fastener fastening tool which can prevent a loaded fastener from coming off by a reaction force at a cutoff time of a weakened portion.

### Background Art

The present applicant has already proposed a fastener (Patent Document 1) which expands a diameter of a female member by pushing a male member into the female member, or a rivet fastening air tool (Patent Document 2).

### Prior Art Documents

### Patent Documents

Patent Document 1: Japanese Unexamined Patent Publication No. 2010-43728
Patent Document 2: Japanese Unexamined Patent Publication No. 2010-29939

### Summary of the Invention

### Problems to be Solved by the Invention

There has been no fastener fastening tool, however, there has been a demand for the tool. Namely, the aforementioned rivet fastening air tool is loaded by tearing off the thin-walled weakened portion of a rivet (see paragraph [0102] of the Patent Document 2).
However, a fastener differs from the rivet used for the rivet fastening air tool, in which the structure is complicated, and increases in size, so that a wall thickness of the weakened portion also increases to be comparatively thick, and it is difficult to tear off. Accordingly, the weakened portion has been required to be cut off.

In the fastener fastening tool, however, there has been the possibility for the already loaded fastener to come off by the reaction force at the cutoff time of the weakened portion.
Thus, the present invention is made in view of the aforementioned demand, and an object thereof is to be capable of preventing the loaded fastener from coming off by the reaction force at the cutoff time of the weakened portion.

### Means for Solving the Problems

The present invention is made in order to achieve the aforementioned object, and the present invention has the following characteristics.

First, a fastener comprises the following structure.

### (1) Female member

A female member includes a flange portion and a leg portion hanging from the flange portion.

### (2) Male member

A male member can expand an outer diameter of the leg portion by pushing the male member toward the leg portion from the flange portion.

Incidentally, in a section of "Best Modes of Carrying out the Invention", the fastener will be explained as an example of a fastener wherein the male member is screwed into a hoisting member of the female member, thereby expanding a diameter of the female member through the hoisting member, i.e., a "hoisting-type screw grommet". However, the fastener is not limited to the above. The fastener may be, for example, a general fastener wherein the hoisting member is omitted, and the male member is directly screwed into the female member, i.e., a "screw grommet"; a fastener wherein the male member is pressed only at a fastening time so as to expand the diameter of the female member, and the male member is twisted and turned at a releasing time so as to restore the female member, i.e., a "scrivet"; a fastener which does not include a screw structure, expands the diameter of the female member by a first pressing, and restores the female member by a second pressing so as to be capable of releasing a fastened state, i.e., a "push-push rivet"; or a fastener which also does not include the screw structure, expands the diameter of the female member by pressing the male member only at the fastening time, and restores the female member by pulling the male member at the releasing time so as to be capable of releasing the fastened state, i.e., a "push pull rivet".

Secondly, by connecting both adjacent flange portions through a weakened portion by facing the leg portion in the same direction, the fastener is structured as a fastener row wherein a plurality of fasteners is linked together like beads.
Thirdly, a fastener fastening tool comprises the following structure.

### (3) Supply channel

A supply channel is for supporting the fastener row slidably in a row.

### (4) Transfer mechanism

A transfer mechanism is for transferring the fastener row supported in the supply channel in one direction.

### (5) Cutoff mechanism

A cutoff mechanism is for cutting off the weakened portion of the fastener row supported in the supply channel.

### (6) Loading member

A loading member is for holding one fastener which has been cut off by the cutoff mechanism in a loading portion which is located in front in a transfer direction of the transfer mechanism, and is positioned by abutting against the front-most row of the supply channel.

### (7) Slide mechanism

A slide mechanism is for moving the loading member forward and backward.

### (8) Push-in mechanism

A push-in mechanism is for expanding the outer diameter of the leg portion by pushing the male member of the fastener loaded in the loading member.

Fourthly, the cutoff mechanism cuts off the weakened portion of the fastener in a second row, positioned in a next row thereof by counting the fastener in the front-most row as the first row, and in subsequent rows.
The present invention may have the following characteristic.

First, between the female member and the female member, there is respectively formed either one of a male screw portion or a female screw portion wherein the male screw portion is screwed in.
Secondly, the push-in mechanism screws the male member in when the male member is pushed in.
Consequently, a tool, which fits into the fastener expanding the diameter of the female member by screwing the male member toward the female member, can be provided.
The present invention may have the following characteristic.

Namely, the cutoff mechanism cuts off the weakened portion between the fastener in the first row and the fastener in the second row. Consequently, the cutoff mechanism can be disposed in an appropriate position.
The present invention may have the following characteristic.

Namely, in the leg portion, there comprises the hoisting member which can expand the outer diameter of the leg portion by advancing an inside of the leg portion toward the flange portion when the male member is screwed in. Consequently, a tool, which fits into the fastener comprising the hoisting member, can be provided.

### Effect of the Invention

Due to the aforementioned structure, the present invention can prevent the loaded fastener from coming off by the reaction force at the cutoff time of the weakened portion. Also, by cutting off the weakened portion before loading, the reaction force due to a cutoff is not allowed to act at a loading time so as to be capable of reliably loading the fastener.

### Brief Description of the Drawings

Fig. 1 is a perspective view of one portion of a fastener fastening tool according to the first embodiment of the present invention.
Fig. 2 is a perspective view for explaining an exterior appearance of the tool.
Fig. 3 is a perspective view for explaining an internal structure of the tool.
Fig. 4 corresponds to Fig. 3, and is a perspective view for explaining a forward-movement state of a loading member wherein a fastener has been loaded.
Fig. 5 corresponds to Fig. 4, and is a perspective view for explaining the forward-movement state of the loading member wherein the fastener has come off.
Fig. 6 is a perspective view wherein one portion in Fig. 3 is enlarged.
Fig. 7 is a perspective view wherein one portion in Fig. 5 is enlarged.
Fig. 8 is a schematic perspective view for explaining a relationship between a fastener row and a cutoff mechanism.
Fig. 9 corresponds to Fig. 8, and is a schematic perspective view for explaining a cutoff state by the cutoff mechanism.
Fig. 10 is a perspective view of a basic configuration example of the fastener.
Fig. 11 is a perspective view of the basic configuration example of the fastener.
Fig. 12(a) is a front view of the basic configuration example of the fastener; Fig. 12 (b) is a right side view of the same; Fig. 12 (c) is a plan view of the same; and Fig. 12(d) is a bottom view of the same.
Fig. 13 is a cross-sectional view showing a usage state of the basic configuration example of the fastener. (A state before an expansion of an intermediate portion)
Fig. 14 is a cross-sectional view showing a usage state of the basic configuration example of the fastener. (A state after the expansion of the intermediate portion)

### Best Modes of Carrying out the Invention

### (Fastener fastening tool 10)

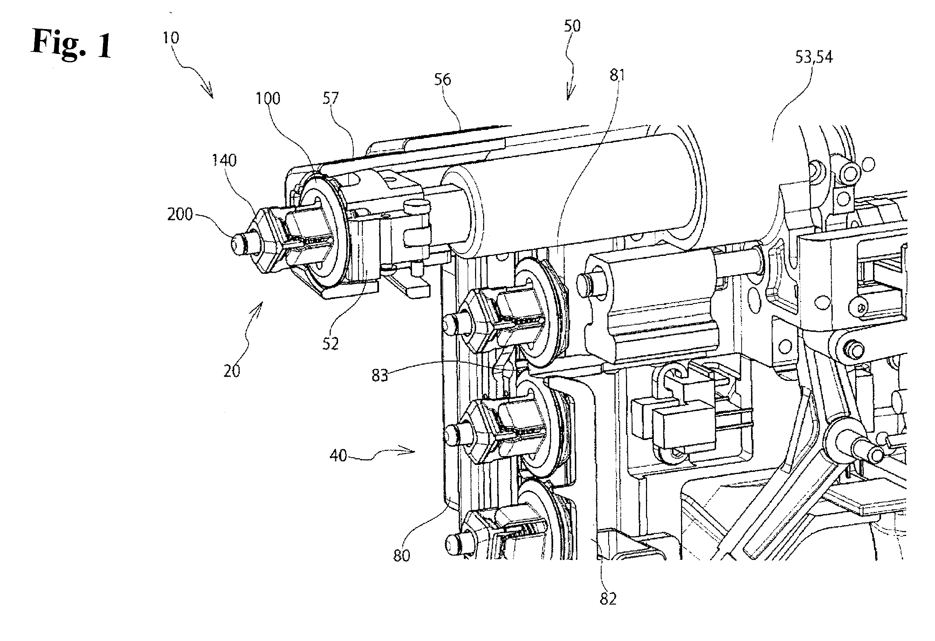

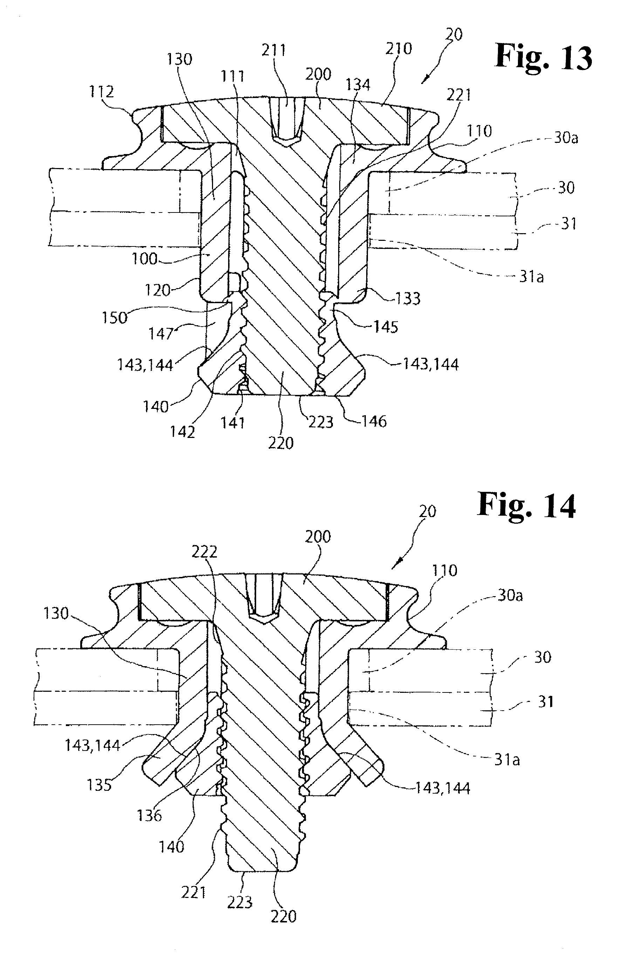

In Figs. 1 to 7, the reference numeral 10 represents a fastener fastening tool, and as shown in Fig. 14, the tool 10 inserts a fastener 20 into an object, for example, attachment holes 30a and 30b formed in two sheets of overlapped panels 30 and 31 in such a way as to pass through so as to fasten the two sheets of panels 30 and 31 in an overlapped state.
Incidentally, although the two sheets of panels 30 and 31 are illustrated as an example for the object, it is not limited to the above.

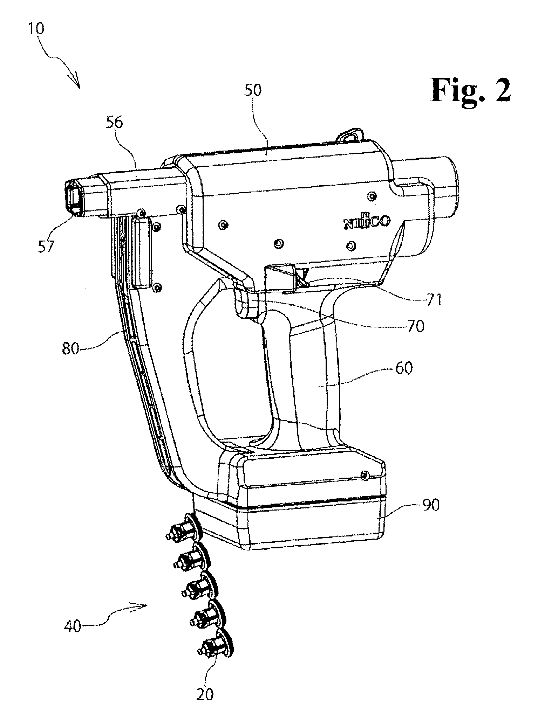

As shown in Fig. 2, the overall tool 10 is formed in a pistol type. In an exterior appearance, as shown in Figs. 1 to 7, the tool 10 broadly comprises the following parts or each portion.
Incidentally, the following (1) to (6) will be explained later.
(1) Fastener row 40
(2) Tool main body portion 50
(3) Grip portion 60
(4) Operation portions 70 and 71
(5) Supply portion 80
(6) Power source portion 90
Incidentally, the parts or each portion of the tool 10 are not limited to the aforementioned (1) to (6).

### (Fastener row 40)

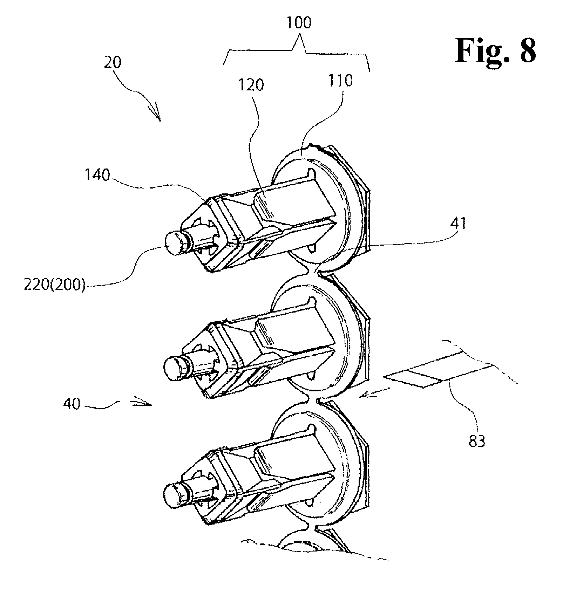

As shown in Fig. 8, the fastener row 40 comprises a plurality of the fasteners 20 linked together like beads.

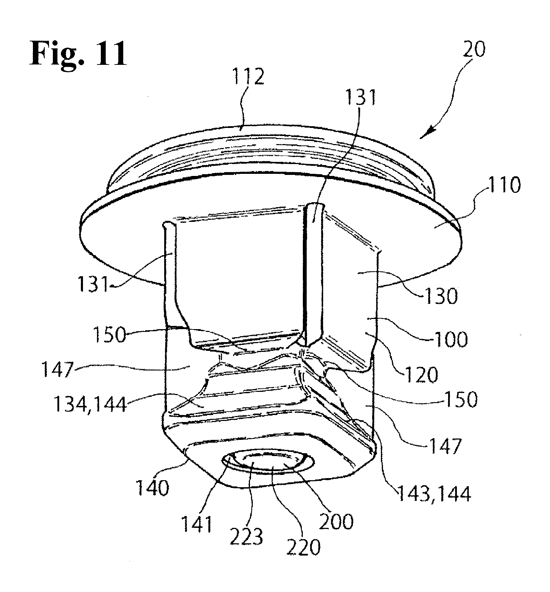

As shown in Figs. 8 to 14, the fastener 20 broadly comprises the following parts.
Incidentally, the parts of the fastener 20 are not limited to the following (1) and (2).

### (1) Female member 100

As shown in Figs. 8 to 14, a female member 100 includes a flange portion 110, and a leg portion 120 hanging from the flange portion 110.

In the leg portion 120, there comprises a hoisting member 140 which can expand an outer diameter of the leg portion 120 by advancing into an inside of the leg portion 120 toward the flange portion 110 when a male member 200 is screwed in.

### (2) Male member 200

As shown in Figs. 8 to 14, the male member 200 can expand the outer diameter of the leg portion 120 by pushing the male member 200 toward the leg portion 120 from the flange portion 110.

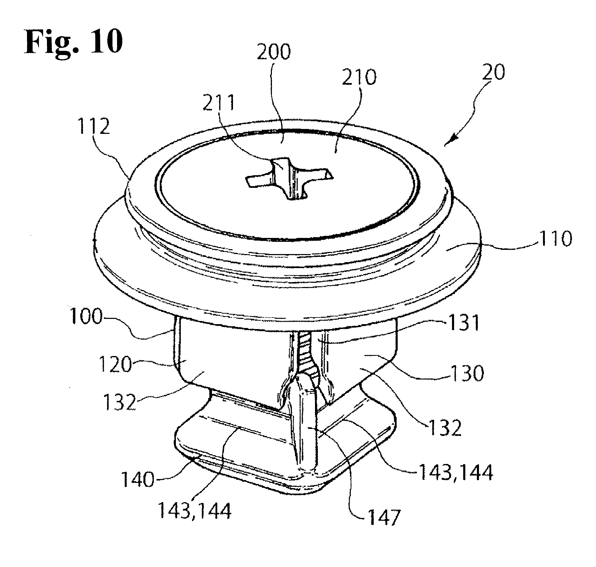

The male member 200 includes a head portion 210 and an axis portion 220 hanging from the head portion 210.
As shown in Fig. 10, Figs. 12(a) to 12(d), and Fig. 13, in the head portion 210, there is formed an operating hole 211 wherein an end of a tool such as a driver and the like is housed.
As shown in Fig. 13 and Fig. 14, on an outer circumference of the axis portion 220, there is formed a male screw portion 221. On the other hand, on an inner circumference of the hoisting member 140, there is formed a female screw portion 142 wherein the male screw portion 221 can be screwed in.

Incidentally, the fastener 20, wherein the male member 200 is screwed into the hoisting member 140 of the female member 100, thereby expanding a diameter of the female member 100 through the hoisting member 140, i.e., a "hoisting-type screw grommet", has been explained as an example. However, the fastener 20 is not limited to the above. The fastener 20 may be, for example, a general fastener wherein the hoisting member 140 is omitted, and the male member 200 is directly screwed into the female member 100, i.e., a "screw grommet"; a fastener wherein the male member 200 is pressed only at a fastening time so as to expand the diameter of the female member 100, and the male member 200 is twisted and turned at a releasing time so as to restore the female member 100, i.e., a "scrivet"; a fastener which does not include a screw structure, expands the diameter of the female member 100 by a first pressing, and restores the female member 100 by a second pressing so as to be capable of releasing a fastened state, i.e., a "push-push rivet"; or a fastener which also does not include the screw structure, expands the diameter of the female member 100 by pressing the male member 200 only at the fastening time, and restores the female member 100 by pulling the male member 200 at the releasing time so as to be capable of releasing the fastened state, i.e., a "push pull rivet".

On the other hand, as shown in Fig. 8, the fastener row 40 comprises a plurality of fasteners 20 linked together like beads by facing the leg portions 120 in the same direction, and by connecting both adjacent flange portions 110 through weakened portions 41.
The weakened portion 41 extends in a diametrical direction from an outer circumference of the disk-shaped flange portion 110. A transverse width of the weakened portion 41 is slimly formed, and a wall thickness of the weakened portion 41 is also thinly formed. The weakened portion 41 is for linking both the outer circumferences of the adjacent flange portions 110. The weakened portion 41 is integrally molded with the fastener 20 by resin.

Incidentally, as previously described, although a structure of the fastener 20 has been disclosed in the previous application (Japanese Unexamined Patent Publication No. 2010-43728) by the present applicant, the fastener 20 will be described later using Figs. 10 to 14.

### (Tool main body portion 50)

As shown in Figs. 1 to 7, the tool main body portion 50 loads one piece of the fastener 20 of the fastener row 40, and is for hitting the fastener 20 into the two sheets of panels 30 and 31 (see Fig. 13 and Fig. 14).

Specifically, as shown in Figs. 1 to 7, the tool main body portion 50 broadly comprises the following respective portion.

### (1) Loading portion 51

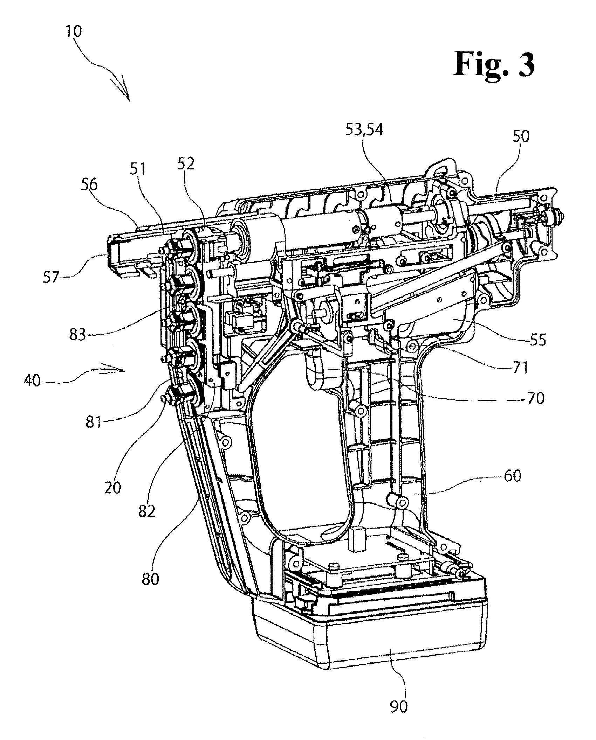

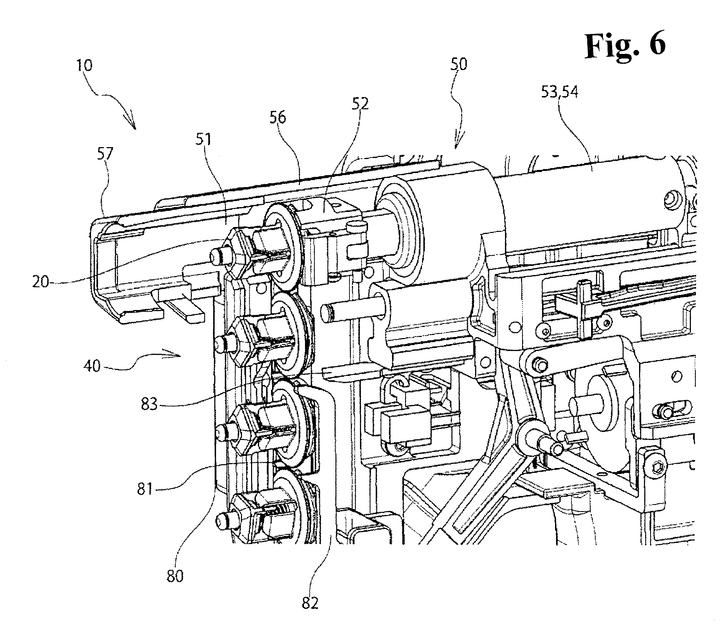

As shown in Fig. 3 and Fig. 6, a loading portion 51 is embedded in the tool main body portion 50, is located in front in a transfer direction of the later-mentioned transfer mechanism 82, and is positioned by abutting against the front-most row of the later-mentioned supply channel 81.

### (2) Loading member 52

As shown in Fig. 3 and Fig. 6, a loading member 52 is embedded in the tool main body portion 50, and in the loading portion 51, the loading member 52 is for holding one piece of the fastener 20 which has been cut off by the later-mentioned cutoff mechanism 83.
Specifically, the loading member 52 holds the flange portion 110 of the fastener 20.

### (3) Slide mechanism 53

As shown in Figs. 1 to 7, a slide mechanism 53 is embedded in the tool main body portion 50, and is for moving the loading member 52 forward and backward.

### (4) Push-in mechanism 54

As shown in Figs. 1 to 7, a push-in mechanism 54 is embedded in the tool main body portion 50, and by pushing the male member 200 of the fastener 20 loaded in the loading member 52 toward the female member 100, the push-in mechanism 54 is for expanding the outer diameter of the leg portion 120 of the female member 100 (see Fig. 13 and Fig. 14).
Specifically, the push-in mechanism 54 screws the male member 200 when the male member 200 is pushed in.

Namely, in the push-in mechanism 54, there includes an end portion fitted into the operating hole 211 of the head portion 210 of the male member 200, and by rotating the push-in mechanism 54 in a state wherein the end portion has been fitted into the operating hole 211, the push-in mechanism 54 screws the male member 200 in.

### (5) Motor 55

As shown in Fig. 3, a motor 55 is embedded in the tool main body portion 50, and is for driving the slide mechanism 53, the push-in mechanism 54, the later-mentioned transfer mechanism 82, and the later-mentioned cutoff mechanism 83.

Incidentally, the motor 55 is one example of a drive source, and is not limited to the above. An electromagnetic plunger may be used for the motor 55, or a drive mechanism by air pressure and oil pressure, an engine, or the like may be also used for the motor 55.

### (6) End cover 56

As shown in Figs. 1 to 7, an end cover 56 is for covering around the loading portion 51.

### (7) End cylinder 57

As shown in Figs. 1 to 7, an end cylinder 57 extends in a cylinder type from the end cover 56, and is for hitting the fastener 20, which has been moved forward by the slide mechanism 53 from the loading portion 51, from an end opening thereof.

### (Grip portion 60)

As shown in Figs. 2 to 5, the grip portion 60 extends toward a lower side from a back of the tool main body portion 50. The grip portion 60 is formed in a grip type which can be held with one's hand, and is for holding the tool 10.

### (Operation portions 70 and 71)

The operation portions 70 and 71 are for carrying out various operations of the slide mechanism 53, the push-in mechanism 54, the transfer mechanism 82, and the cutoff mechanism 83.

Specifically, as shown in Figs. 2 to 5, the operation portions 70 and 71 are structured by the first operation portion 70 provided in a trigger shape in the grip portion 60, and the second operation portion 71 positioned behind the first operation portion 70, and provided in a lateral face of the tool main body portion 50.
The first operation portion 70 is for an actuation of the push-in mechanism 54, i.e., for a rotating operation of the male member 200 of the fastener 20. The second operation portion 71 is for an actuation of the slide mechanism 53, the transfer mechanism 82, and the cutoff mechanism 83, i.e., for a transfer operation of the fastener 20.

Incidentally, as for the operation portions 70 and 71, two pieces are illustrated as an example. However, the pieces of the operation portions 70 and 71 are not limited to the above, and may be provided with a single piece, or three pieces or above.

### (Supply portion 80)

As shown in Figs. 1 to 7, the supply portion 80 is for placing the fastener row 40, extends toward a lower side from a front of the tool main body portion 50, and is linked to the grip portion 60 through the later-mentioned power source portion 90 in a loop fashion.

As shown in Figs. 1 to 9, the supply portion 80 broadly comprises the following respective portion.

### (1) Supply channel 81

As shown in Figs. 1 to 7, the supply channel 81 is for supporting the fastener row 40 slidably in a row.
Specifically, the supply channel 81 slidably holds an outer circumferential portion which is the outer circumference of the flange portion 110 of the female member 100 of the fastener 20 connected through the weakened portion 41, and which is positioned on both sides at a center of the weakened portion 41. The supply channel 81 releases an upper end toward the above-mentioned loading portion 51, and releases a lower end as well so as to place the fastener row 40 from a released lower end while sliding the fastener row 40 in a row upward from underneath.

### (2) Transfer mechanism 82

As shown in Figs. 1 to 7, the transfer mechanism 82 is for transferring the fastener row 40 supported in the supply channel 81 in one direction.
Specifically, the transfer mechanism 82 is for transferring the fastener 20 of the fastener row 40 one by one upward from the lower side. The fastener 20 transferred by the transfer mechanism 82 is transferred to the loading portion 51 one by one from a released upper end of the supply channel 81.

### (3) Cutoff mechanism 83

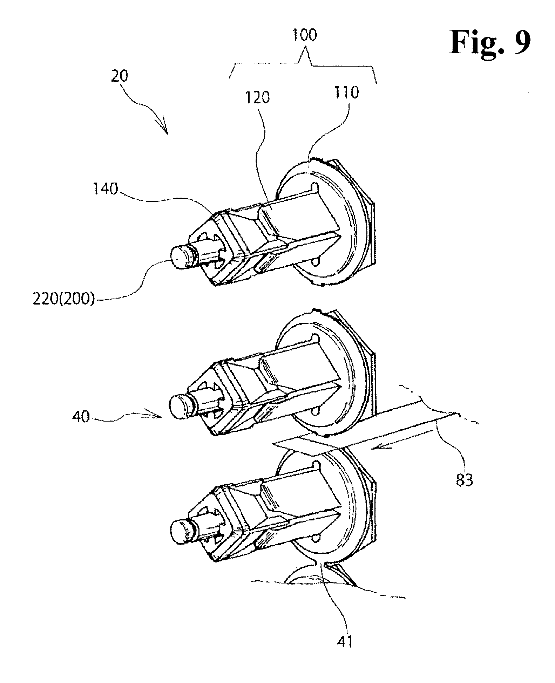

As shown in Figs. 1 to 9, the cutoff mechanism 83 is for cutting off the weakened portion 41 of the fastener row 40 supported in the supply channel 81.
As shown in Fig. 8 and Fig. 9, the cutoff mechanism 83 cuts off the weakened portion 41 of the fastener 20 in a second row, positioned in a next row thereof by counting the fastener 20 in the front-most row as the first row, and in subsequent rows.

Specifically, the cutoff mechanism 83 pushes and cuts the weakened portion 41 in between the fastener 20 in the first row and the fastener 20 in the second row by sliding a cutter in a thickness direction of the weakened portion 41. Namely, the cutoff mechanism 83 slides the cutter, which is the cutoff mechanism 83, toward a leg portion 120 side from a flange portion 110 side of the female member 100.
Incidentally, although the cutter has been illustrated as an example for the cutoff mechanism 83, it is not limited to the above, and scissors may be used for the cutoff mechanism 83. Also, as for a cutoff direction of the weakened portion 41, the cutter has been slid in the thickness direction of the weakened portion 41. However, the cutoff direction is not limited to the above, and the cutter may be slid in a transverse width direction of the weakened portion 41, or even in a case of using the scissors, the weakened portion 41 may be cut off from the thickness direction of the weakened portion 41, or may be cut off from the transverse width direction of the weakened portion 41.

### (Power source portion 90)

As shown in Figs. 2 to 5, the power source portion 90 is positioned on a lower side of the tool 10, and is positioned in such a way as to link the grip portion 60 and the supply channel 81. The power source portion 90 is structured from a battery, and is for supplying a power source to the motor 55.

Incidentally, as for the power source portion 90, although the battery is illustrated as an example, it is not limited to the above.

### (Usage method of the tool 10)

A usage method of the tool 10 having the aforementioned structure will be explained.
First, as shown in Fig. 2, the fastener row 40 is loaded in the supply channel 81 of the tool 10.
Secondly, the transfer mechanism 82 is driven by operating the second operation portion 71, and the forefront fastener 20 of the fastener row 40 is transferred up to the front-most row of the supply channel 81, i.e., up to an upper end portion.

Thirdly, as shown in Fig. 8 and Fig. 9, the cutter, which is the cutoff mechanism 83, is moved forward, and cuts off the weakened portion 41 in between the fastener 20 in the first row and the fastener 20 in the second row by counting the front-most row of the supply channel 81 as the first row. Incidentally, the cutter is moved backward again after being moved forward so as to move away from the supply channel 81.
Fourthly, the fastener 20, in which the weakened portion 41 has been cut off, is transferred to the loading portion 51 from the front-most row of the supply channel 81 by the transfer mechanism 82. As shown in Fig. 3 and Fig. 6, the flange portion 110 of the female member 100 thereof is held by the loading member 52.

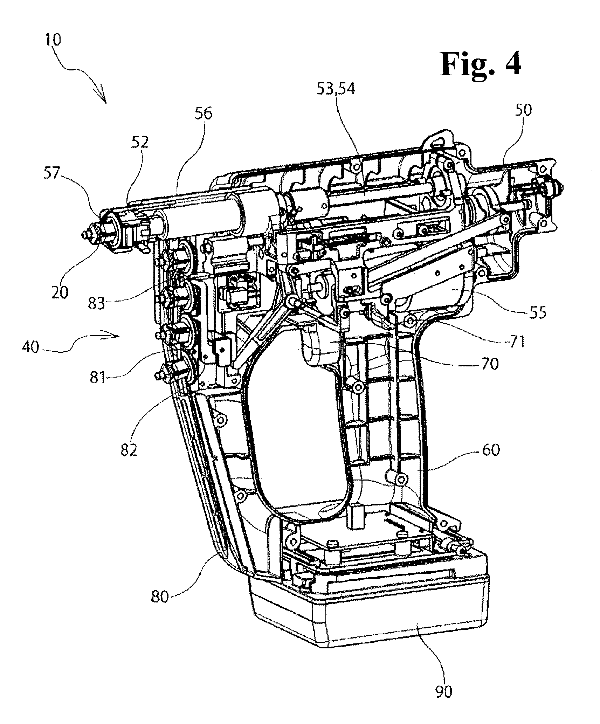

Fifthly, as shown in Fig. 1 and Fig. 4, the loading member 52 is moved forward by the slide mechanism 53 so as to protrude the leg portion 120 of the female member 100 from the end cylinder 57.
Sixthly, as shown in Fig. 13, the leg portion 120 is inserted into the attachment holes 30a and 30b of the two sheets of panels 30 and 31 serially.
Seventhly, by operating the first operation portion 70, the push-in mechanism 54 is driven so as to rotate the head portion 210 of the male member 200. When the head portion 210 rotates, due to an engagement between the male screw portion 221 of the axis portion 220 and the female screw portion 142 of the hoisting member 140, as shown in Fig. 14, the hoisting member 140 advances the inside of the leg portion 120 toward the flange portion 110, so that the leg portion 120 expands the diameter at a back side of the panel 31. Consequently, through the fastener 20, the two sheets of panels 30 and 31 are fastened in an overlapped state.

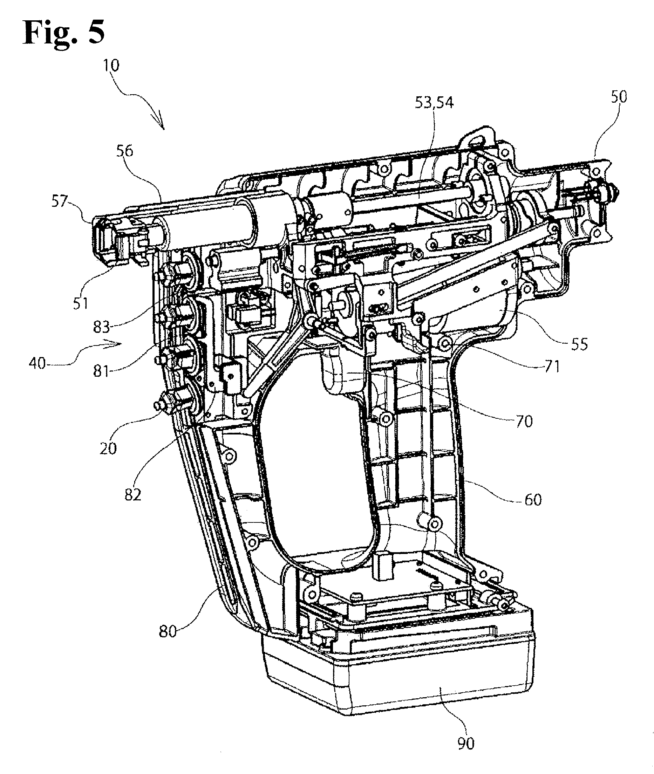

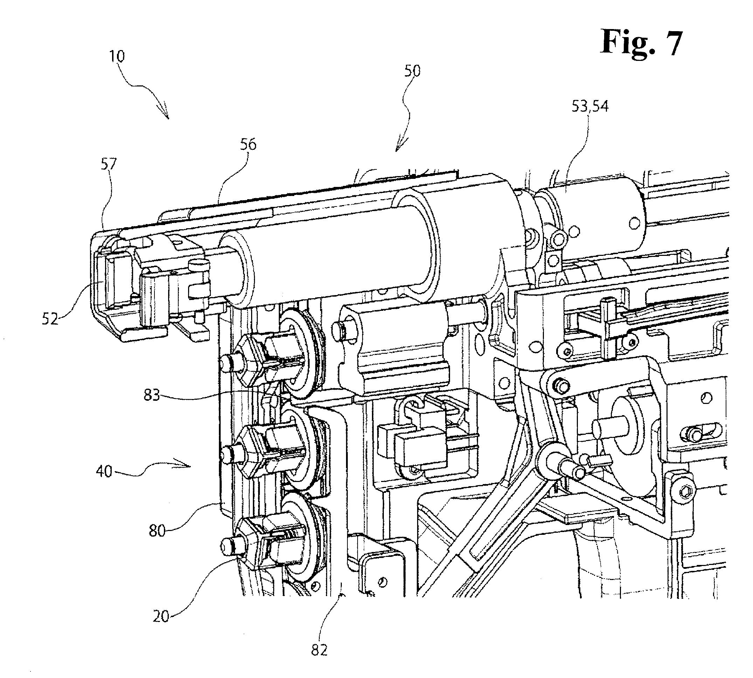

Eighthly, when the tool 10 is pulled away from the panel 30, since a fastening force between the panel 30 and the fastener 20 surpasses a holding force of the loading member 52, as shown in Fig. 5 and Fig. 7, the fastener 20 comes off from the loading member 52. Incidentally, when the second operation portion 71 is operated in the second place, the loading member 52 moves backward by the slide mechanism 53, and stands by at the loading portion 51.

### (Fastener 20)

Next, using Figs. 10 to 14, details of the fastener 20 will be explained.

The fastener 20 includes the female member 100 comprising the flange portion 110 and the leg portion 120. In an illustrated example, the fastener 20 is structured by combining the male member 200, which produces the aforementioned expansion by the aforementioned forward-screwing operation, with such female member 100 beforehand. In the illustrated example, such fastener 20 is attached to the panels 30 and 31 by expanding one portion of the leg portion 120 by the forward-screwing operation of such male member 200 after the leg portion 120 of the female member 100 is inserted relative to the attachment holes 30a and 30b formed having a size wherein the flange portion 110 of the female member 100 can not enter in, and by sandwiching the panels 30 and 31 between one portion of such expanded leg portion 120 and the flange portion 110 from two sides (or front and back, or inside and outside, or up and down, or right and left). In the illustrated example, in order to provide such expansion function to the female member 100, such female member 100 is made of plastic. The male member 200 comprises the head portion 210, and the axis portion 220 having the male screw portion 221, and typically, the male member 200 is made of plastic or metal.

### (Male member 200)

In the illustrated example, such male member 220 is structured by the head portion 210 forming a circular disk shape, and the axis portion 220 wherein an axis base portion 222 is integrally connected in the center of one face side of the head portion 210. On the other face side of such head portion 210, there is formed the operating hole 211 in which the end of the tool such as the driver and the like is housed.

### (Female member 100)

On the other hand, in the illustrated example, the female member 100 is structured in such a way that the flange portion 110 has a circular disk shape, and that the leg portion 120 has a hollow angular cylinder shape. The leg portion 120 is structured thinner than an outer diameter of the flange portion 110. The leg portion 120 integrally connects one end of a cylinder thereof in the center of one face side of the flange portion 110. In the flange portion 110, there is formed a through-bore 111 communicated with the inside of the leg portion 120 connected to the flange portion 110 in the aforementioned manner. On the other face side of the flange portion 110, there is formed a circling rising portion 112 by positioning such through-bore 111 on an inner side. An inner diameter of the circling rising portion 112 is approximately equal to a diameter of the head portion 210 of the male member 200, and the male member 200 is combined with the female member 100 in such a way as to house the head portion 210 inside the circling rising portion 112, and as to insert the axis portion 220 thereof into the leg portion 120 through the through-bore 111 of the flange portion 110.

The leg portion 120 of the female member 100 is divided by the hoisting member 140 and a leg main body 130. The hoisting member 140 is structured in such a way as to be moved to the flange portion 110 side by the forward-screwing operation of the male member 200 which has been inserted from the flange portion 110 side. The leg main body 130 is located between such hoisting member 140 and the flange portion 110, and is structured in such a way as to be expanded by inserting the hoisting member 140, which is moved to the flange portion 110 side by the forward-screwing operation, to the inner side.

### (Leg main body 130)

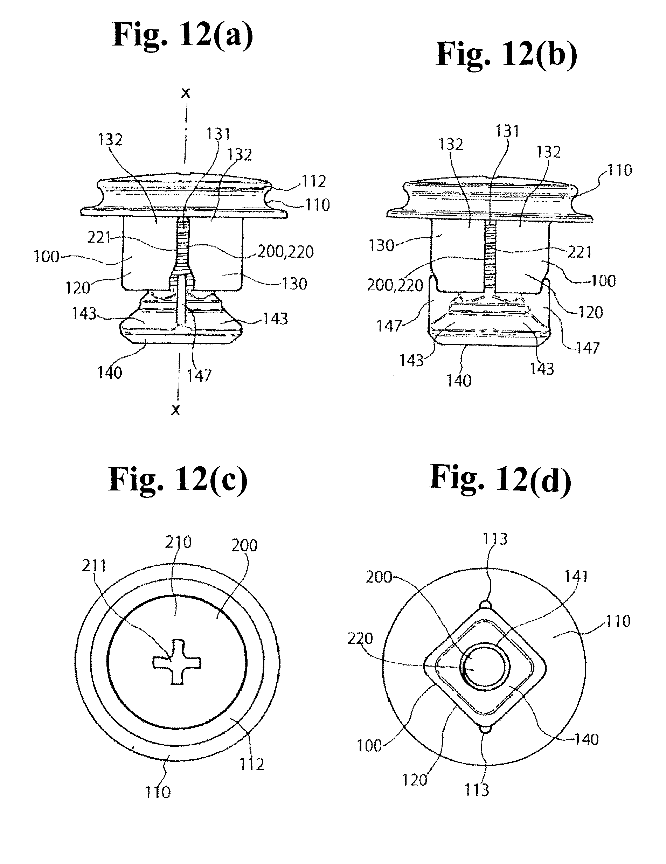

In the illustrated example, the leg main body 130 is structured in such a way that both inner and outer faces have an approximately square outline in a cross-sectional surface in a direction orthogonal to an axis line x (Fig. 12(a)/a center line) of the leg portion 120. The inner side of the leg main body 130 is made wider than a thickness of the axis portion 220 of the male member 200. Also, at four corners of such leg main body 130, there are respectively formed slits 131 along the axis line x of the leg portion 120. The leg main body 130 is partitioned into four sheets of plate pieces 132 by such slit 131 ranged between a cylinder one end 133 positioned on a hoisting member 140 side in such leg main body 130, and a cylinder other end 134 positioned on a connecting side to the flange portion 110. The through-bore 111 of the flange portion 110 of the female member 100 has a rectangular hole which follows an outline of the inner side of such leg main body 130. Incidentally, in the illustrated example, in such flange portion 110, there are formed brunched split grooves 113 communicated with a pair of corner portions, which is in an opposing position of the through-bore 111, and continuing to a formation position of the circling rising portion 112 (Fig. 12(d)).

### (Hoisting member 140)

The hoisting member 140 comprises a through hole 141 of the axis portion 220 of the male member 200 on an inner side. In the illustrated example, in the through hole 141, there is formed the female screw portion 142 corresponding to the male screw portion 221 of the axis portion 220 of the male member 200. In the illustrated example, in a state before the forward-screwing operation, the male member 200 positions an axis end portion 223 side thereof inside the hoisting member 140 by engaging the male screw portion 221 with the female screw portion 142 of the hoisting member 140. If the female screw portion 142 is formed on the inner side of the hoisting member 140 in the above-mentioned manner, by the aforementioned forward-screwing operation, the hoisting member 140 can be smoothly inserted into the inner side of the leg main body 130. Aside from the illustrated example, in a case wherein the female screw portion 142 is not formed on the inner side of the hoisting member 140 in the above-mentioned manner, the male member 200 is not combined with the female member 100 beforehand. Then, from a state wherein the leg portion 120 of the female member 100 has been inserted into the attachment holes 30a and 30b of the panels 30 and 31, the male portion 200 as a tapping screw is screwed into the female member 100. By the screwing (forward-screwing) of the male member 200, the hoisting member 140 is inserted into the inner side of the leg main body 130 so as to be attached to the panels 30 and 31 by the expansion of the leg main body 130.

In the illustrated example, in the cross-sectional surface in the direction orthogonal to the axis line x of the leg portion 120, an outer face of the hoisting member 140 is structured in such a way as to have an approximately square outline shape in any position in a direction of the axis line. Namely, the hoisting member 140 comprises outer faces 143 respectively corresponding to the four sheets of plate pieces 132 of the leg main body 130 divided by the slits 131. Also, the hoisting member 140 includes a cylinder one end 145 having an approximately equal thickness to a width of the inner side of the leg main body 130, and inserted into an inner side of the cylinder one end 133 of the leg main body 130; and a cylinder other end 146 having an approximately equal thickness to a thickness of an outer side of the leg main body 130. In the illustrated example, such hoisting member 140 and the leg main body 130 are connected and joined through a thin-walled connecting portion 150 which is installed between the outer face 143 of the cylinder one end 145 of the hoisting member 140 and an inner face 136 of the cylinder one end 133 of the leg main body 130 (Fig. 13). Also, in the illustrated example, outside the hoisting member 140, there are formed rib-like guide portions 147 along the axis line x of the leg portion 120 respectively in a pair of corner portions which is in an opposing position among four corner portions of the hoisting member 140. One end of the guide portion 147 is positioned on the flange portion 110 side of the female member 100 rather than the cylinder one end 145 of the hoisting member 140. In the state before the forward-screwing operation, one end of the guide portion 147 has been inserted into the slit 131 of the leg main body 130. Then, by such forward-screwing operation, when the hoisting member 140 is moved in a direction of being inserted further into the inside of the leg main body 130, i.e., when the hoisting member 140 is moved toward the flange portion 110 side of the female member 100, the guide portion 147 is guided to the slit 131 so as to be moved along the slit 131.

Then, in the embodiment, at a time of the aforementioned expansion of the leg main body 130 of the leg portion 120 of the female member 100, the outer face 143 of the hoisting member 140, which has contact with the inner face 136 of an expansion portion 135 of the leg main body 130, is structured in such a way as to have a shape following the inner face 136 of the expansion portion 135. Specifically, at the time of the expansion of the leg main body 130 of such leg portion 120, the outer face 143 of the hoisting member 140, which has contact with the inner face 136 of the expansion portion 135 of the leg main body 130, becomes a curved face 144 having a curvature following a curvature of the inner face of the expansion portion 135 (Fig. 14). In the illustrated example, four outer faces 143 of the hoisting member 140 respectively include the curved faces 144 curved in a direction of gradually expanding the hoisting member 140 as the hoisting member 140 goes toward a cylinder other end 146 side from a cylinder one end 145 side thereof.

### (Usage method of the fastener 20)

After the leg portion 120 is inserted into the attachment holes 30a and 30b of the panels 30 and 31 comprising the attachment holes 30a and 30b of the leg portion 120 of the fastener 20, when the male member 200 is operated to be screwed forward, i.e., when the male member 200 is operated in a direction of being inserted further than the flange portion 110 side of the female member 100 while the male member 200 is rotating, the hoisting member 140 is moved in a direction of approaching the flange portion 110 side. Accordingly, by being pushed from the inside by the hoisting member 140 which is moved in the aforementioned manner, the leg main body 130 is expanded. Thereby, the fastener 20 is fastened to the panels 30 and 31 by sandwiching the panels 30 and 31 between the flange portion 110 thereof and the expansion portion 135. In the fastened state, the outer face 143 of the hoisting member 140 has the shape following the inner face 136 of the expansion portion 135 of the leg main body 130, so that in order to prevent a gap between both faces 143 and 136 as much as possible, both the faces 143 and 136 can be contacted along a direction of the axis line x of the leg portion 120 with the faces (Fig. 14). Thereby, even in a case wherein a force in a direction of crossing such axis line x acts on the panels 30 and 31, typically, even when the force in the aforementioned direction acts on one of the two panels 30 and 31, or both the two panels 30 and 31 which are fastened and joined through the fastener 20, one of the panels 30 and 31, or both the panels 30 and 31 can be prevented from moving in the direction of the aforementioned force. Accordingly, such panels 30 and 31 can be fastened and joined with little wobbling. In the illustrated example, the axis base portion 222 of the axis portion 220 of the male member 200 is structured slightly larger compared to a formation portion of the male screw portion 221. In the fastened state, a gap between the leg main body 130 and the axis base portion 222 is reduced so as to contribute to a reduction of the wobbling.

In the illustrated example, first, the leg portion 120 of the female member 100 is inserted into the attachment holes 30a and 30b of the panels 30 and 31 forming a rectangular shape following an outline of the outside of the leg portion 120 (Fig. 13). Next, when the male member 200 is operated to be screwed forward, the head portion 210 thereof is caught on the flange portion 110 of the female member 100, so that the male member 200 itself does not move in the direction of being inserted further than the flange portion 110. However, the hoisting member 140 receives a moving force in the direction of approaching the flange portion 110. The hoisting member 140 is prevented from turning associated with the male member 200 by the guide portion 147, and only a movement by being guided to the slit 131 is allowed, so that due to the forward-screwing operation of the male member 200, the thin-walled connecting portion 150 is broken. Also, the hoisting member 140 is gradually moved toward the flange portion 110 side, so that the leg main body 130 is expanded (Fig. 14).

The overall female member 100 may not have to be made of plastic, and such hoisting member 140 can be structured by metal. In that case, without providing the thin-walled connecting portion 150 connecting the hoisting member 140 and the leg main body 130, both portions 140 and 130 are provided as a separate body. In a case wherein the hoisting member 140 is made of metal, it is difficult for a situation, wherein the male screw portion 221 of the male member 200 has crushed the female screw portion 142 of the hoisting member 140 at a time of the forward-screwing operation, to occur. Accordingly, by sufficiently moving the hoisting member 140 to the flange portion 110 side by such forward-screwing operation, the leg main body 130 can be appropriately expanded. Also, a rigidity of the guide portion 147 formed in such hoisting member 140 can be enhanced. Even in a case wherein the female member 100 is downsized, with the guide portion 147 guided to the slit 131 at the time of the forward-screwing operation, the hoisting member 140 can be reliably prevented from turning associated with the male member 200.

The fastened state of the fastener 20 to such panels 30 and 31 can be released by a backward-screwing operation of the male member 200. When the male member 200 is operated to be screwed backward from a state of Fig. 14, since the hoisting member 140 is fitted into the inner side of the leg main body 130 in a state wherein the leg main body 130 is expanded, the male member 200 gradually slips out of the inside of the female member 100. When the male member 200 is pushed into the female member 100 from a state wherein the male member 200 has been screwed backward for a dimension portion in which the hoisting member 140 has been moved to the flange portion 110 side by the aforementioned forward-screwing operation, the hoisting member 140 is slipped out and returned to a position before the forward-screwing operation from the leg main body 130, and an expanded state of the leg main body 130 is released, so that the fastened state of the fastener 20 to the panels 30 and 31 can be released.

All contents of the specification, claims, drawings, and abstract of Japanese Patent Applications No. 2010-137020 filed on June 16, 2010 are cited in their entireties herein and are incorporated as a disclosure of the specification of the present invention.

## Claims

1. A fastening tool for a fastener,
the fastener including a female member including a flange portion and a leg portion hanging from the flange portion, and a male member expanding an outer diameter of the leg portion by pushing toward the leg portion from the flange portion;
wherein a fastener row is formed in which a plurality of fasteners is linked together by connecting the adjacent flange portions through a weakened portion by facing the leg portion in a same direction,
the fastener fastening tool comprising:
a supply channel supporting the fastener row slidably in a row;
a transfer mechanism transferring the fastener row supported in the supply channel in one direction;
a cutoff mechanism cutting off the weakened portion of the fastener row supported in the supply channel;
a loading member holding one fastener which has been cut off by the cutoff mechanism in a loading portion located in front in a transfer direction of the transfer mechanism, and positioned by abutting against front-most row of the supply channel;
a slide mechanism moving the loading member forward and backward; and
a push-in mechanism expanding the outer diameter of the leg portion by pushing the male member of the fastener loaded in the loading member,
wherein the cutoff mechanism cuts off the weakened portion of the fastener, by counting the fastener in a front-most row as a first row, in a second row positioned in a next row and subsequent rows thereof.

2. A fastening tool according to claim 1, wherein either one of a male screw portion, or a female screw portion in which the male screw portion is screwed in, is respectively formed between the female member and the female member, and the push-in mechanism screws the male member in when the male member is pushed in.

3. A fastening tool according to claim 1 or 2, wherein the cutoff mechanism cuts off the weakened portion between the fastener in the first row and the fastener in the second row.

4. A fastening tool according to claim 2, wherein the leg portion includes a hoisting member to expand the outer diameter of the leg portion by advancing inside the leg portion toward the flange portion when the male member is screwed in.
